# EUROPEAN PATENT APPLICATION

(11) **EP 3 144 343 A1**
(43) Date of publication of application: **22.03.2017**
(21) Application number: 15793218.7
(22) Date of filing: 14.05.2015
(51) Int. Cl.: C08J 5/04, C08L 101/00, C08K 7/02, C08J 5/18

(54) **LONG FIBER REINFORCED PLASTIC COMPOSITE MATERIAL AND METHOD FOR MANUFACTURING LONG FIBER REINFORCED PLASTIC COMPOSITE MATERIAL**

(30) Priority: 15.05.2014 KR 20140058271
(71) Applicant: LG Hausys, Ltd., Seoul 150-721 (KR)
(72) Inventor: PARK, Jong-Sung, Daejeon 302-734 (KR); KIM, Hee-June, Seongnam-si Gyeonggi-do 463-730 (KR); CHOI, Jae-Hoon, Anyang-si Gyeonggi-do 431-749 (KR); SONG, Kang-Hyun, Anyang-si Gyeonggi-do 431-839 (KR)
(74) Representative: Gill Jennings & Every LLP
(86) International application number: PCT/KR2015/004847
(87) International publication number: WO 2015/174758

(57) **Abstract**

Provided is a long fiber reinforced plastic composite material comprising: a thermoplastic plastic resin; and long fibers dispersed so as to have unidirectional orientation, wherein the content of the unidirectionally oriented long fibers is 70 to 100 % by weight in the total content of the long fibers.

## Description

### [Technical Field]

The present disclosure relates to a long fiber reinforced plastic composite material and method for manufacturing a long fiber reinforced plastic composite material.

### [Background Art]

A continuous fiber reinforced composite material made by impregnating a continuous fiber into a matrix resin has been increasing demand in automobiles, aircrafts, building materials, and wind power fields, since it can utilize excellent mechanical properties of fibers according to the arrangement of the fibers.

There are many methods for impregnating a continuous fiber into a matrix resin. The most common method is a pultrusion method where resins are dissolved at a high temperature and impregnated in a mold while pulling fibers.

Further, combing glue method is also used where a matrix resin and a continuous fiber used as a reinforcing fiber are combined and impregnated using a heat and pressure. Composite materials according to this combing glue method allow for weaving, but cause fibers to cut off and blown in air.

### [Disclosure]

### [Technical Problem]

It is an aspect of the present disclosure to provide a long fiber reinforced plastic composite material with improved properties.

### [Technical Solution]

In one embodiment of the present disclosure, provided is a long fiber reinforced plastic composite material, comprising: a thermoplastic plastic resin; and long fibers dispersed to have unidirectional orientation, wherein the content of the unidirectionally oriented long fibers is about 70% to about 100% by weight, relative to the total content of the long fibers.

The long fiber reinforced plastic composite material may include the thermoplastic plastic resin as a matrix material, and the long fibers as a reinforcing material dispersed in the matrix material.

The long fiber may have a length of about 1 mm to about 100 mm.

The long fibers may have an average diameter of about 5 µm to about 20 µm.

The long fibers may have a content of about 40 wt% to about 75 wt% of a total.

The long fiber may include at least one selected from the group consisting of glass fiber, carbon fiber, basalt fiber, aramid fiber, natural fiber, and combinations thereof.

The thermoplastic plastic resin may include at least one selected from the group consisting of polypropylene (PP), polyethylene (PE), polyethylene terephthalate (PET), polybutylene terephthalate (PBT), polyamide (PA), acrylonitrile-butadiene-styrene copolymer (ABS), polycarbonate (PC)-ABS alloy resin, and combinations thereof.

The long fiber reinforced plastic composite material may be a sheet having a thickness of about 0.2 mm to about 10 mm.

In another embodiment of the present disclosure, provided is a method for manufacturing a long fiber reinforced plastic composite material sheet, including: preparing an unidirectional continuous fiber reinforced plastic sheet comprising a thermoplastic plastic resin and continuous fibers dispersed to have unidirectional orientation; and cutting the continuous fibers in the unidirectional continuous fiber reinforced plastic sheet by applying an impact to the continuous fibers having the unidirectional orientation from the outside to form long fibers, wherein the content of the unidirectionally oriented long fibers is about 70% to about 100% by weight, relative to the total content of the long fibers.

In the manufacturing method of the long fiber reinforced plastic composite material sheet, a linear impact can be applied to a continuous fiber reinforced plastic sheet, which is extrusion-molded, discharged from an extruder, and moves in a predetermined direction, using a device equipped with a line impact part which can apply a linear impact in a width direction perpendicular to a moving direction of the continuous fiber reinforced plastic sheet.

In the manufacturing method of the long fiber reinforced plastic composite material sheet, the line impact part moves up and down reciprocally. When the line impact part comes to a lower position, a linear impact can be applied to the continuous fiber reinforced plastic sheet. At this time, it is possible to control the duration of time of up and down movement to adjust the length of the long fibers formed by cutting the continuous fibers.

In the manufacturing method of the long fiber reinforced plastic composite material sheet, the up and down speed of the line impact part can be kept constant to form long fibers having a constant length.

The step of preparing a unidirectional continuous fiber reinforced plastic sheet may be carried out by long fiber thermoplastic-direct (LFT-D) process.

### [Advantageous Effects]

The long fiber reinforced plastic composite material is excellent in the mechanical properties and the processability.

### [Description of Drawings]

Fig. 1 shows a plan view of the long fiber reinforced plastic composite material sheet according to one embodiment of the present disclosure.
Fig. 2 shows a schematic plan view of the long fiber reinforced plastic composite material sheet containing long fibers dispersed in low orientation.
Fig. 3 shows a schematic view of an example of applying a linear impact to a unidirectional continuous fiber reinforced plastic sheet to form long fibers in the method of manufacturing a long fiber reinforced resin composite material according to another embodiment of the present disclosure.

### <Description of Symbols>

- 1:: Continuous fiber
- 2:: Long fiber
- 5:: Line impact part
- 10:: Long fiber reinforced plastic composite material sheet
- 10':: Unidirectional continuous fiber reinforced plastic sheet

### [Best Mode]

Hereinafter, embodiments of the present disclosure will be described in detail with reference to the accompanying drawings. It should be understood that the present disclosure is not limited to the following embodiments, and that the embodiments are provided for illustrative purposes only. The scope of the disclosure should be defined only by the accompanying claims and equivalents thereof.

In one embodiment of the present disclosure, there is provided a long fiber reinforced plastic composite material, comprising: a thermoplastic plastic resin; and long fibers dispersed to have unidirectional orientation, wherein the content of the unidirectionally oriented long fibers is about 70% to about 100% by weight, relative to the total content of the long fibers.

The long fiber reinforced plastic composite material may include the thermoplastic plastic resin as a matrix material, and the long fibers as a reinforcing material dispersed in the matrix material, whereby it has improved strength compared to a thermoplastic plastic resin.

Typically, there may be a long fiber or a continuous fiber that can be used as a reinforcing material for the fiber reinforced plastic composite material. In the case of using a long fiber, the physical properties such as mechanical strength may be lower in comparison with the case of using a continuous fiber, but in this case higher processability can be obtained.

The long fiber reinforced plastic composite material may be dispersed, such that the long fibers have a unidirectional orientation in the matrix material of the thermoplastic plastic resin, thereby ensuring excellent processability according to the use of the long fibers, while at the same time implementing good physical properties.

The long fiber reinforced plastic composite material can be usefully applied as an alternative material for steel products in automobiles, aircrafts, construction materials, and wind power fields, thereby capable of realizing a weight reduction. For example, the long fiber reinforced plastic composite material is suitable for implementing a rib-shaped or round-shaped structure. Therefore, particularly the long fiber reinforced plastic composite material is suitable for use as a material for car bodies.

The long fiber reinforced plastic composite material comprises long fibers having a unidirectional orientation, whereby more excellent properties can be ensured even if a same content of long fibers is used.

The degree of unidirectional orientation can be highly enhanced by manufacturing the long fiber reinforced plastic composite material according to the method to be described later.

As used herein, the term "unidirectional" indicates that, for certain long fibers, a particular long fiber is rotated against the other long fibers in an angle of less than 10 degrees, specifically 5 degrees, where it will be understood to include an inevitable error range that is difficult to identify with a naked eye.

In particular, more excellent mechanical properties can be realized by the long fibers having a higher orientation contained in the long fiber reinforced plastic composite material.

Specifically, in the long fiber reinforced plastic composite material, the long fibers having a unidirectional orientation may comprise from about 70% to about 100% by weight of the total long fibers. Thus, more excellent mechanical properties can be significantly implemented by the long fiber reinforced plastic composite material comprising such unidirectional long fibers. Such long fiber reinforced plastic composite material comprising a high content of long fibers can be implemented by a method to be described later. More specifically, in the long fiber reinforced plastic composite material, the long fibers having a unidirectional orientation may comprise from about 80% to about 100% by weight of the total long fibers, which can be implemented by a method to be described later.

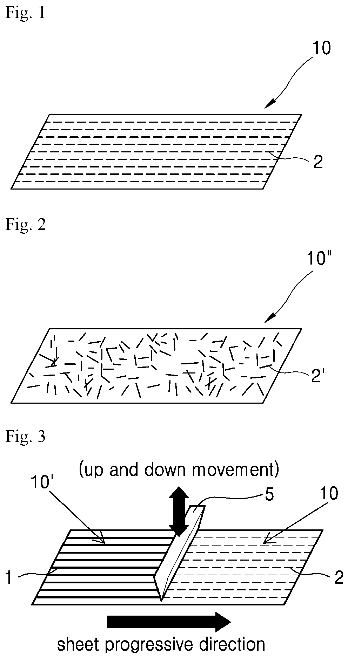

Fig. 1 shows a schematic plan view of a long fiber reinforced plastic composite material sheet according to one embodiment of the present disclosure. As shown in Fig. 1, the long fiber reinforced plastic composite material sheet 10 includes long fibers 2 with high orientation in a single direction.

Fig. 2 shows a schematic plan view of a long fiber reinforced plastic composite material sheet 10" containing the long fibers 2' dispersed with low orientation for better understanding.

The long fiber may have a length of about 1 mm to about 100 mm. When the long fiber reinforced plastic composite material comprises long fibers having a length in the above range, excellency in both processability and physical properties can be implemented.

As used herein, the continuous fiber refers to a fiber having a length greater than the long fiber, and in particular the continuous fiber is defined herein as having more than twice the length of the long fiber.

The long fibers may have an average diameter of about 5 µm to about 20 µm, and particularly about 10 µm to about 20 µm. When the long fiber reinforced plastic composite material comprises the long fibers having a length in the above range, excellency in both processability and physical properties can be implemented.

The content of the long fibers may be from about 40% to about 75% by weight of the total long fiber reinforced plastic composite material, and specifically, about 60% to 70% by weight. When the long fiber reinforced plastic composite material comprises the long fibers having the content in the above range, excellency in both processability and physical properties can be implemented.

The long fiber reinforced plastic composite material may be disposed to have a predetermined orientation in the long fiber reinforced plastic composite material, thereby allowing the composite to comprise a high content of the long fibers. Thus, the mechanical properties of the composite material can be further improved by a high content of the long fibers.

The long fibers may include at least one selected from the group consisting of glass fiber, carbon fiber, basalt fiber, aramid fiber, natural fiber, and combinations thereof, but not limited thereto. Any long fibers that can be used as a reinforcing material for thermoplastic plastic resin can be used without limitation.

The thermoplastic plastic resin may include, for example, polypropylene (PP), polyethylene (PE), polyethylene terephthalate (PET), polybutylene terephthalate (PBT), polyamide (PA), acrylonitrile-butadiene-styrene copolymer (ABS), polycarbonate (PC)-ABS alloy resin, or combinations thereof.

The long fiber reinforced plastic composite material may be made of a sheet having a thickness of about 0.2 mm to about 10 mm.

In another embodiment of the present disclosure, there is provided a method for manufacturing a long fiber reinforced plastic composite material sheet, including: preparing an unidirectional continuous fiber reinforced plastic sheet comprising a thermoplastic plastic resin, and continuous fibers dispersed to have unidirectional orientation; and cutting the continuous fibers in the unidirectional continuous fiber reinforced plastic sheet by applying an impact to the continuous fibers having the unidirectional orientation from the outside to form long fibers, wherein the content of the unidirectionally oriented long fibers is about 70% to about 100% by weight, relative to the total content of the long fibers.

The above mentioned long fiber reinforced plastic composite material sheet can be prepared by the method for manufacturing a long fiber reinforced plastic composite material sheet.

The method for manufacturing a long fiber reinforced plastic composite material sheet may include initially preparing a unidirectional continuous fiber reinforced plastic sheet (abbreviated herein by "UD sheet") in which continuous fibers are oriented in a single direction in a thermoplastic plastic resin, and cutting the continuous fibers in the UD sheet by an impact to prepare the long fiber reinforced plastic composite material sheet.

The UD sheet is commercially available.

With the method for manufacturing a long fiber reinforced plastic composite material sheet, since the continuous fibers are cut in the direction as oriented to form the long fibers, the long fibers can maintain a high degree of orientation in a single direction. Specifically, with the method for manufacturing a long fiber reinforced plastic composite material sheet, the long fiber reinforced plastic composite material can be prepared to account for about 70% to about 100% by weight of the long fibers having a unidirectional orientation of the total long fibers.

That is, the method for manufacturing a long fiber reinforced plastic composite sheet can ensure the orientation of the long fibers by cutting the continuous fibers as previously orientated as they are. In this regard, a high degree of orientation can be realized compared to an existing method using a specific processing method to ensure the orientation of the long fibers.

The long fiber reinforced plastic composite material sheet containing long fibers dispersed to have a high degree of orientation can achieve more excellent physical properties such as a mechanical property and the like as described above.

Fig. 3 shows a schematic view of an example forming a long fiber by applying a linear impact to a unidirectional continuous fiber reinforced plastic sheet.

Referring to Fig. 3, in the manufacturing method of the long fiber reinforced plastic composite material sheet, the linear impact can be applied using a device (not all shown) equipped with line impact part 5 which can apply a linear impact in a width direction perpendicular to a moving direction of the unidirectional continuous fiber reinforced plastic sheet 10', relative to a continuous fiber reinforced plastic sheet 10' which is extrusion-molded, and discharged from an extruder, and then moves in a predetermined direction (depicted as a sheet progressive direction in Fig. 3). The continuous fibers 1 in the unidirectional continuous fiber reinforced plastic sheet 10' are cut to long fibers 2 by an impact applied by the line impact part 5.

After the continuous fiber reinforced plastic sheet 10' reaches the line impact part 5, once the long fibers 2 are formed, the long fiber reinforced plastic composite material sheet 10 is formed, and subsequently cut to a suitable length for use as an article of long fiber reinforced plastic composite material sheet.

The line impact part 5 can move up and down reciprocally. When the line impact part 5 comes to a lower position, a linear impact can be applied to the continuous fiber reinforced plastic sheet 10' in conformity with a shape of the line impact part 5. It is possible to control the duration of time of up and down movement of the line impact part 5, and thus the length of the long fibers 2 formed by cutting the continuous fibers 1 can be adjusted.

For example, the long fibers 2 having a predetermined length can be formed by controlling the up and down movements of the line impact part 5 at a constant speed.

The long fiber reinforced plastic composite material prepared such that the long fibers 2 having a predetermined length is to be highly oriented in a single direction can realize better physical properties.

The unidirectional continuous fiber reinforced plastic sheet 10' may be prepared by known methods, such as, for example, by a long fiber thermoplastic-direct (LFT-D) method.

For the production of the unidirectional continuous fiber reinforced plastic sheet 10', first, a pellet type of thermoplastic plastic resin and an additive is mixed in a first extruder and transferred to a second extruder. Then, continuous fibers as a reinforcing material are added and extruded to form a strand type of intermediate. Then, the intermediate is press-molded to prepare the unidirectional continuous fiber reinforced plastic sheet 10' having a desired structure and shape.

The long fibers in the long fiber reinforced plastic composite material sheet prepared according to the above method can have an orientation in an angle of less than 10 degrees, specifically less than 5 degrees, relative to the direction toward which the continuous fiber reinforced plastic sheet discharged from the extruder during the manufacturing process moves.

Hereinafter, preferred examples of the present disclosure will be described. However, it should be noted that while the preferred examples are listed for easy understanding of the contents of the present disclosure, the present disclosure is not limited to these examples.

### EXAMPLES

### Example 1

A continuous fiber reinforced plastic sheet having a thickness of 3 mm was prepared containing 70 parts by weight of glass fibers having an average diameter of 17µm (SE4121, OCV product) and 30 parts by weight of polypropylene. As shown in Fig. 3, a line impact part was installed to move up and down at a constant speed to apply a linear impact to the continuous fiber reinforced plastic sheet. A long fiber reinforced plastic composite material sheet was prepared having uniformly oriented long fibers with an average length of 100 mm.

### Comparative Example 1

Without particularly considering an orientation, a long fiber reinforced plastic sheet having a thickness of 3 mm was prepared containing 40 parts by weight of glass fibers having an average diameter of 17 µm and an average length of 50 mm (SE4121, OCV product) and 60 parts by weight of polypropylene by LFT-D method.

### Comparative Example 2

Without particularly considering an orientation, a long fiber reinforced plastic sheet having a thickness of 3 mm was prepared containing 70 parts by weight of glass fibers having an average diameter of 17µm and an average length of 50 mm (SE4121, OCV product) and 30 parts by weight of polypropylene by LFT-D method.

### Evaluation

### Experiment 1

With respect to the long fiber reinforced plastic composite material sheet prepared in Examples 1 and Comparative Examples 1 and 2, specific weight, tensile strength, tensile modulus, flexural strength, flexural modulus, and notched Izod impact strength were measured, and summarized in Table 1 below.

In addition, cross sectional images taken with an optical microscope for the long fiber reinforced plastic composite material sheet prepared in Example 1 and Comparative Example 1 were analyzed to evaluate a degree of orientation. The images were evaluated with a naked eye, and then % count of the long fibers in parallel among the total count of the long fibers was calculated, and summarized in Table 1 below. The determination of parallel long fibers was made in the case where the two long fibers exist within an angle of about 5 degrees.

**Table 1**

| | | Ex. 1 | C. Ex. 1 | C. Ex. 2 |
|---|---|---|---|---|
| Specific weight (ASTM D792) | | 1.65 | 1.23 | 1.65 |
| Tensile (ASTM D3039) | Strength (MPa) | 280 | 98 | 729 |
| | Modulus (GPa) | 25 | 6.5 | 36 |
| Flexural (ASTM D790) | Strength (MPa) | 420 | 161 | 535 |
| | Modulus (GPa) | 24 | 8.0 | 31 |
| Orientation (%) | | 95 | 40 | - |

From the results of Table 1, since Comparative Example 1 had excellent fluidity by using long fibers, it could be molded in a curved shape such as a rib, whereas all of the physical properties are lower than using continuous fibers as in Comparative Example 2, leading to a poor mechanical strength. Meanwhile, it can be seen that since the long fiber reinforced plastic composite material sheet containing long fibers in Example 1 had excellent fluidity, it could be molded in a curved shape such as a rib, and at the same time all of the physical properties including a mechanical property are also excellent.

While the preferred examples of the invention have been shown and described for illustrative purpose only, it should be understood that various substitutions, modifications and variations may be made by those skilled in the art without departing from the spirit or scope of the invention. Accordingly, all such modifications and variations are included in the scope of the invention as defined by the following claims.

## Claims

1. A long fiber reinforced plastic composite material, comprising: a thermoplastic plastic resin; and long fibers dispersed to have unidirectional orientation, wherein the content of the unidirectionally oriented long fibers is 70 to 100 % by weight in the total content of the long fibers.

2. The long fiber reinforced plastic composite material of claim 1, wherein the long fiber reinforced plastic composite material comprises the thermoplastic plastic resin as a matrix material, and the long fibers as a reinforcing material dispersed in the matrix material.

3. The long fiber reinforced plastic composite material of claim 1, wherein the long fiber has a length of 1 mm to 100 mm.

4. The long fiber reinforced plastic composite material of claim 1, wherein the long fibers have an average diameter of 5 µm to 20 µm.

5. The long fiber reinforced plastic composite material of claim 1, wherein the long fibers haves a content of 40wt% to 75wt% of a total.

6. The long fiber reinforced plastic composite material of claim 1, wherein the long fiber comprises at least one selected from the group consisting of glass fiber, carbon fiber, basalt fiber, aramid fiber, natural fiber, and combinations thereof.

7. The long fiber reinforced plastic composite material of claim 1, wherein the thermoplastic plastic resin comprises at least one selected from the group consisting of polypropylene (PP), polyethylene (PE), polyethylene terephthalate (PET), polybutylene terephthalate (PBT), polyamide (PA), acrylonitrile-butadiene-styrene copolymer (ABS), polycarbonate (PC)-ABS alloy resin, and combinations thereof.

8. The long fiber reinforced plastic composite material of claim 1, wherein the long fiber reinforced plastic composite material is a sheet having a thickness of 0.2 mm to 10 mm.

9. A method for manufacturing a long fiber reinforced plastic composite material, comprising:
preparing a unidirectional continuous fiber reinforced plastic sheet comprising a thermoplastic plastic resin and continuous fibers dispersed to have a unidirectional orientation; and
cutting the continuous fibers in the unidirectional continuous fiber reinforced plastic sheet by applying an impact to the continuous fibers having the unidirectional orientation from the outside to form long fibers;
wherein the content of the unidirectionally oriented long fibers is 70 to 100% by weight of the total content of the long fibers.

10. The method for manufacturing a long fiber reinforced plastic composite material of claim 9, wherein a linear impact is applied to a continuous fiber reinforced plastic sheet, which is extrusion-molded, discharged from an extruder, and moves in a predetermined direction, using a device equipped with a line impact part which can apply a linear impact in a width direction perpendicular to a moving direction of the continuous fiber reinforced plastic sheet.

11. The method for manufacturing a long fiber reinforced plastic composite material of claim 10, wherein the line impact part moves up and down reciprocally, and when the line impact part comes to a lower position, a linear impact is applied to the continuous fiber reinforced plastic sheet, and the duration of time of up and down movement is controlled to thereby adjust the length of the long fibers formed by cutting the continuous fibers.

12. The method for manufacturing a long fiber reinforced plastic composite material of claim 11, wherein the long fibers having a constant length are formed by controlling the up and down movement of the line impact part at a constant speed.

13. The method for manufacturing a long fiber reinforced plastic composite material of claim 9, wherein the step of preparing a unidirectional continuous fiber reinforced plastic sheet is carried out by a long fiber thermoplastic-direct (LFT-D) process.
